Europäisches Patentamt

European Patent Office

Office européen des brevets

(11) Veröffentlichungsnummer: **0 215 144**
**B1**

(12) **EUROPÄISCHE PATENTSCHRIFT**

(45) Veröffentlichungstag der Patentschrift:
03.05.89

(51) Int. Cl.⁴: **B23D 77/00**

(21) Anmeldenummer: 85111675.6

(22) Anmeldetag: 16.09.85

(54) **Reibahle mit Kühlmittelzufuhr.**

(43) Veröffentlichungstag der Anmeldung:
25.03.87 Patentblatt 87/13

(45) Bekanntmachung des Hinweises auf die Patenterteilung:
03.05.89 Patentblatt 89/18

(84) Benannte Vertragsstaaten:
AT BE CH DE FR GB IT LI NL SE

(56) Entgegenhaltungen:
CH-A- 449 390
CH-A- 492 506
CH-C- 329 115
DE-A- 1 427 165
DE-A- 3 234 238

(73) Patentinhaber: **Dihart AG, CH-4657 Dulliken(CH)**

(72) Erfinder: **Christoffel, Johannes, Dipl.-Ing.,
Bleumatthöhe 19, CH-5264 Gipf-Oberfrick(CH)**

(74) Vertreter: **Quehl, Horst Max, Dipl.-Ing.,
Seestrasse 640 Postfach 90,
CH-8706 Meilen/Zürich(CH)**

## Beschreibung

Die Erfindung betrifft eine Reibahle mit den Merkmalen des Oberbegriffs des Patentanspruchs 1.

Bei einer durch die CH-A 449 390 bekannten Reibahle wird das Kühlmittel durch eine mit ihr gleichachsige Bohrung bis in den Schneidkopf geführt und fliesst dort durch mehrere schräg nach vorn gerichtete Bohrungen zwischen den Schneiden nach aussen in die zu bearbeitende Bohrung hinein. Hingegen ist bei Reibahlen mit einem nachstellbaren Schneidkopf entsprechend der CH-A 329 115, der DE-A 1 427 165 oder der DE-A 3 234 238 der Kern der Reibahle im Bereich des Schneidkopfes durch eine Konusschraube ausgefüllt, so dass bei derartigen Reibahlen auf die Kühlmittelzufuhr durch den Schneidkopf hindurch verzichtet werden musste. Dies bestätigt die DE-A 3 234 238, bei der Kühlmittelkanäle in aufwendiger Technik in flachem Winkel aussen an dem Schaft der Konusschraube vorbeigeführt werden.

Der Erfindung liegt die Aufgabe zugrunde, eine verbesserte Kühlmittelzufuhr zu Reibahlen zu ermöglichen, deren Schneidkopf durch eine Konusschraube nachstellbar ist. Die Lösung dieser Aufgabe erfolgt aufgrund der Merkmale des kennzeichnenden Teils des Patentanspruchs 1. Vorteilhafte Ausgestaltungen der Erfindung sind der folgenden Beschreibung von zeichnerisch dargestellten Ausführungsbeispielen zu entnehmen und bilden Gegenstand der abhängigen Patentansprüche.

Es zeigen:

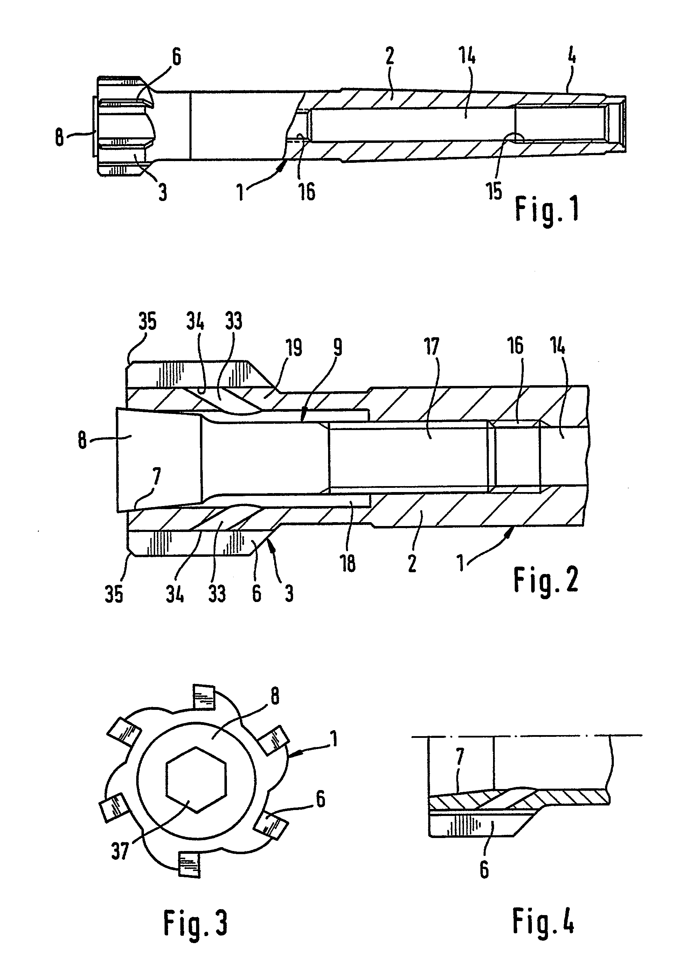

Fig. 1 eine teilweise axial geschnittene Gesamtansicht einer Reibahle,

Fig. 2 einen Axialschnitt durch den den Schneidkopf aufweisenden vorderen Teil der Reibahle nach Fig. 1 in vergrösserter Darstellung,

Fig. 3 eine stirnseitige Ansicht auf den Schneidkopf der Reibahle nach Fig. 2,

Fig. 4 einen axialen Teilschnitt im Bereich des Schneidkopfes einer Reibahle mit weggelassener Konusschraube,

Fig. 5 einen Axialschnitt durch eine erste Ausführungsform einer Konusschraube einer erfindungsgemässen Reibahle,

Fig. 6 einen Axial- und Radialschnitt durch eine zweite Ausführungsform einer Konusschraube,

Fig. 7 einen Axial- und Radialschnitt durch eine dritte Ausführungsform einer Konusschraube und

Fig. 8 eine Seitenansicht und einen Radialschnitt einer vierten Ausführungsform einer Konusschraube.

Die Reibahle 1 hat einen Schaft 2, an dessen vorderen Ende der Schneidkopf 3 in einem Stück angeformt ist und dessen hinteres Ende 4 dafür vorgesehen ist, in einem üblichen Aufnahmefutter einer Werkzeugmaschine aufgenommen zu werden.

Wie an sich durch die CH-PS 329 115 bekannt, ist der die Hartmetallschneiden 6 tragende Schneidkopf 3 entsprechend der Abnutzung der Hartmetallschneiden nachstellbar, indem er hohl ausgeführt ist und eine konische Innenwand 7 aufweist, an der der konische Kopf 8 einer Konusschraube 9, 10, 11, 12 anliegt, die zum Aufweiten in den Schaft 2 eingeschraubt wird. Hierfür erstreckt sich die Konusschraube durch den gesamten vorderen Bereich der Reibahle 1, durch den gemäss der Erfindung die Zufuhr des Kühl- und Schmiermittels erfolgen soll.

Für die Zufuhr des Kühl- und Schmiermittels erstreckt sich durch den Schaft 2 ein Axialkanal 14, der im hinteren Teil der Reibahle 1 ein Innengewinde 15 für die sichere Verbindung mit der Werkzeugmaschine aufweist und der im vorderen Bereich der Reibahle 1 ein anderes Innengewinde 16 hat, in das das Gewindeschaft 17 der Konusschraube 9–12 eingreift.

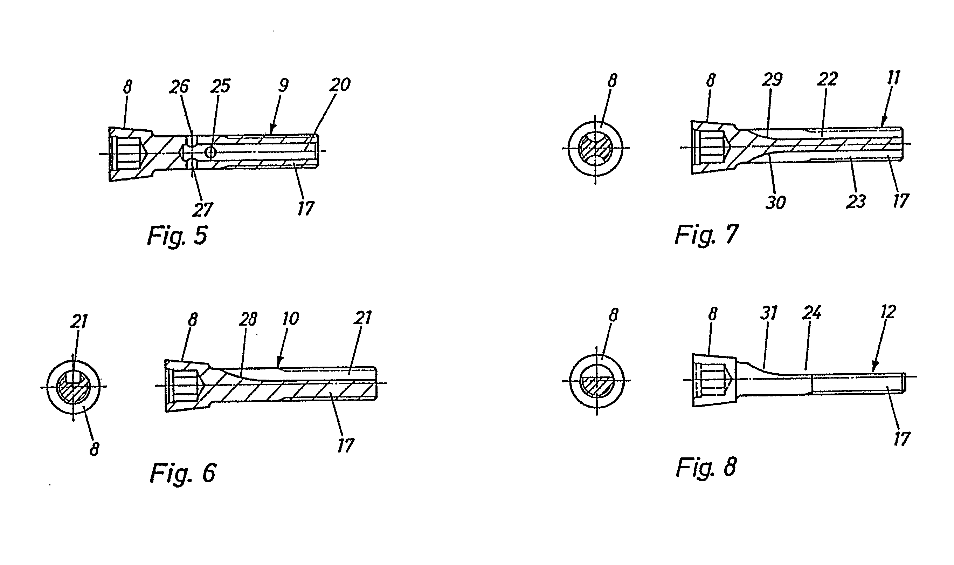

Um die Zufuhr des Kühl- und Schmiermittels durch den Gewindeschaft 17 der Konusschraube hindurch zu einem Ringkanal 18 zu ermöglichen, der sich zwischen der Konusschraube 9–12 und der Wand 19 des hohlen Schneidkopfes 3 befindet, ist in diesem ein axialer Kühl- und Schmiermittelkanal 20 (Fig. 5) oder mindestens ein achsparalleler Kühl- und Schmiermittelkanal 21–24 (Fig. 6–8) vorgesehen, der sich vom Ende des Gewindeschaftes 17 aus erstreckt und über mindestens eine Öffnung 25–27 oder einen Auslaufteil 28–31 in den Ringkanal 18 mündet.

Die Zufuhr des Kühl- und Schmiermittels erfolgt aus diesem Ringkanal 18 durch mindestens einen Austrittskanal 33, der sich durch die Wand 19 des hohlen Schneidkopfes 3 erstreckt, direkt zwischen den Hartmetallschneiden 6, so dass diese optimal gekühlt und geschmiert werden und auch Späne verbessert weggespült werden. Dabei münden vorzugsweise je ein oder mehrere Austrittskanäle 33 in jeder Lücke zwischen zwei Hartmetallschneiden 6 und vorzugsweise zum vorderen Ende des Schneidkopfes 3 bzw. seiner Schneiden 6 hin, unter einem Winkel im Bereich von 30° bis 45°. Bei einer vorzugsweisen Anordnung der Austrittsöffnungen 34 der Austrittskanäle 33 im axial mittleren Bereich der Schneiden 6 ist folglich der austretende Kühl- und Schmiermittelstrahl kurz vor die vordere Kante 35 der Schneiden 6 gerichtet, so dass dieser am stärksten beanspruchte Bereich intensiv von dem Kühl- und Schmiermittel umspült wird.

Für eine möglichst starke Kühl-, Schmier- und Spülwirkung sind in der Reibahle möglichst grosse Strömungsquerschnitte vorzusehen, wobei die Anforderungen an die Festigkeit, insbesondere auch der Konusschraube zu berücksichtigen sind. Es hat sich gezeigt, dass die im Durchmesser begrenzte Konusschraube trotz Schwächung des Querschnittes ihres Gewindeschaftes 17 durch einen oder mehrere Kühl- und Schmiermittelkanäle 20–24 entsprechend den Ausführungsbeispielen der Fig. 5 bis 8 noch ausreichend belastbar ist, um den Schneidkopf 3 aufzuweiten und ohne die Gefahr eines Bruchs der Konusschraube. Das Drehmoment zum Spannen der Konusschraube 9–12 wird mittels eines in den Innensechskant 37 des Schraubenkopfes 8 eingreifenden Werkzeuges aufgebracht.

Festigkeitsuntersuchungen an Konusschrauben 9–12 mit den in den Fig. 5 bis 8 dargestellten Querschnittsformen, bei gleichem Gesamtquerschnitt der Kühl- und Schmiermittelkanäle 20–24 der miteinander verglichenen Konusschrauben, haben gezeigt, dass ein axialer Kanal 20 die geringste Schwächung der Konusschraube 9 mit sich bringt, während die stärkste Schwächung bei einseitiger Abflachung des Schaftquerschnittes entsprechend dem Ausführungsbeispiel der Fig. 8 auftritt, obwohl auch diese Ausführungsform erfindungsgemäss geeignet ist.

**Patentansprüche**

1. Reibahle mit einem durch eine Konusschraube aufweitbaren Schneidkopf (3), einem axial durch den Reibahlenschaft (2) geführten Kühlmittelkanal (14) und mindestens einer im Bereich des Schneidkopfes (3) vorgesehenen Kühlmittelaustrittsöffnung (34), dadurch gekennzeichnet, dass der axiale Kühlmittelkanal (14) vor dem Schneidkopf (3) in eine den Gewindeschaft (17) der Konusschraube (9–12) aufnehmende Gewindebohrung (16) und anschliessend an diese in einen hohlzylindrischen, durch die Konusschraube (9–12) aufweitbaren Teil (3, 19) des Reibahlenschaftes (2) übergeht, der den Schneidkopf (3) aufweist, so dass zwischen dem hohlzylindrischen Schaftteil (3, 19) und der Konusschraube (9–12) ein Ringkanal (18) eingeschlossen ist, wobei in der Konusschraube mindestens ein achsparalleler Kühlmitteldurchtrittskanal (20–24) vorgesehen ist, der die Verbindung zwischen dem axialen Kühlmittelkanal (14) und dem Ringkanal herstellt und mindestens ein Kühlmittelaustrittskanal (33) von dem Ringkanal (18) aus zwischen Schneiden (6) des Schneidkopfes (3) mündet.

2. Reibahle nach Anspruch 1, dadurch gekennzeichnet, dass die Austrittsöffnung (34) des Kühlmittelaustrittskanals (33) sich am axial mittleren Bereich der Schneiden (6) befindet.

3. Reibahle nach Anspruch 1 oder 2, dass der Kühlmittelaustrittskanal (33) unter einem Winkel im Bereich von 30° bis 45° gegenüber der Reibahlenachse nach vorn in Richtung zur vorderen Kante (35) der Schneiden (6) verläuft.

4. Reibahle nach einem der Ansprüche 1 bis 3, dadurch gekennzeichnet, dass der Gewindeschaft (17) der Konusschraube (9) hohlzylindrisch ist und im Bereich des Ringkanals (18) in der Konusschraube mindestens eine Öffnung (25–27) vorgesehen ist.

5. Reibahle nach einem der Ansprüche 1 bis 3, dadurch gekennzeichnet, dass der Schaft (17) der Konusschraube (10, 11) mindestens eine Längsnut (21–23) aufweist, die sich von seinem äusseren Ende bis in den Bereich des Ringkanals (18) erstreckt.

6. Reibahle nach einem der Ansprüche 1 bis 3, dadurch gekennzeichnet, dass der Schaft (17) der Konusschraube (12) bis zu dem Bereich des Ringkanals (18) einseitig abgeflacht ist.

**Claims**

1. Reamer with a cutter head (3) expansible by a conical screw, a coolant supply through an axial channel (14) of the reamer shank (2) and at least one coolant outlet (34) provided in the vicinity of the cutter head (3), characterized in that upstream of the cutter head (3), the axial coolant channel (14) passes into a tapped hole (16) receiving the threaded shank (17) of said conical screw (9–12) and then into a hollow cylindrical part (3, 19) of the reamer shank (2) expansible by the conical screw (9–129) having the cutter head (3), so that a ring channel (18) is provided between the hollow cylindrical part (3, 19) and the conical screw (9–12), the latter being provided with at least one axially parallel coolant passage channel (20–24) forming the connection between the axial coolant channel (14) and the ring channel and from the latter at least one coolant outlet channel (33) issues between the cutters (6) of the cutter head (3).

2. Reamer according to claim 1, characterized in that the outlet port (34) of the coolant outlet channel (33) is located in the axially central region of the cutters (6).

3. Reamer according to claim 1 or 2, characterized in that the coolant outlet channel (33) is at an angle with respect to the reamer axis in the forwards direction towards the leading edge (35) of the cutters (6).

4. Reamer according to one of the claims 1 to 3, characterized in that the threaded shank (17) of the conical screw (9) is hollow cylindrical and at least one opening (25–27) is provided in the vicinity of the ring channel (18) in the conical screw.

5. Reamer according to one of the claims 1 to 3, characterized in that the shank (17) of the conical screw (10, 11) has at least one longitudinal slot (21–23) extending from its outer end into the vicinity of the ring channel (18).

6. Reamer according to one of the claims 1 to 3, characterized in that the shank (179) of the conical screw (12) is flattened on one side up to the vicinity of the ring channel (18).

**Revendications**

1. Alésoir comportant une tête de coupe (3), élargissable au moyen d'une vis conique, un canal axial (14) d'arrivée du fluide de refroidissement traversant la tige (2) de l'alésoir et au moins un orifice de sortie (34) du fluide de refroidissement, prévu dans la zone de la tête de coupe (3), caractérisé en ce que le canal axial (14) du fluide de refroidissement passe, avant la tête de coupe (3), dans un trou fileté (16) recevant la tige filetée (17) de la vis conique (9–12) et, après celui-ci, dans une partie (3, 19) en cylindre creux, élargissable au moyen de la vis conique (9–12), de la tige (2) de l'alésoir, partie qui comporte la tête de coupe (3), de telle sorte qu'entre la partie cylindrique creuse (3, 19) de la tige et la vis conique (9–12) se forme un canal annulaire (18), au moins un canal (20–24) de passage du fluide de refroidissement, parallèle à l'axe, étant prévu dans la vis conique, canal qui assure la liaison entre le canal axial (14) du fluide de refroidissement et le canal annulaire, et au moins un canal de sortie (33) du fluide de refroidissement débouchant du canal annulaire (18) entre des taillants (3) de la tête de coupe (3).

2. Alésoir suivant la revendication 1, caractérisé en ce que l'orifice de sortie (34) du canal de sortie (33) du fluide de refroidissement se trouve, dans le sens de l'axe, dans la zone du milieu des taillants (6).

3. Alésoir suivant la revendication 1 ou 2, caractérisé en ce que le canal de sortie (33) du fluide de refroidissement se présente sous un angle d'environ 30° à 45° par rapport à l'axe de l'alésoir, vers l'avant, en direction de l'arête (35) des taillants (6).

4. Alésoir suivant l'une quelconque des revendications 1 à 3, caractérisé en ce que la tige filetée (17) de la vis conique (9) comporte un creux cylindrique et en ce qu'au moins un orifice (25–27) est prévu dans la vis conique dans la zone du canal annulaire (18).

5. Alésoir suivant l'une quelconque des revendications 1 à 3, caractérisé en ce que la tige (17) de la vis conique (10, 11) présente au moins une rainure longitudinale (21–23) qui s'étend de son extrémité extérieure jusque dans la zone du canal annulaire (18).

6. Alésoir suivant l'une quelconque des revendications 1 à 3, caractérisé en ce que la tige (17) de la vis conique (12) présente un méplat, sur un côté, jusque dans la zone du canal annulaire (18).

Fig. 1

Fig. 2

Fig. 3

Fig. 4

Fig. 5

Fig. 6

Fig. 7

Fig. 8

EP 0 215 144 B1